# FASCICULE DE BREVET EUROPEEN

(11) **EP 3 468 785 B1**
(45) Date de publication et mention de la délivrance du brevet: **05.08.2020**
(21) Numéro de dépôt: 17734799.4
(22) Date de dépôt: 12.06.2017
(51) Int. Cl.: B29D 30/46, B29D 30/06, B29D 30/68

(54) **DISPOSITIF DE DÉCOUPE DU PROFIL D'UNE BANDE DE ROULEMENT DANS UN PROFILÉ CAOUTCHOUTEUX ET PROCÉDÉ DE DÉCOUPE UTILISANT UN TEL DISPOSITIF**
VORRICHTUNG ZUM SCHNEIDEN EINES PROFILS EINER REIFENLAUFFLÄCHE IN EINEM KAUTSCHUKPROFILELEMENT UND SCHNEIDVERFAHREN UNTER VERWENDUNG EINER SOLCHEN VORRICHTUNG
DEVICE FOR CUTTING A PROFILE OF A TYRE TREAD IN A RUBBER PROFILED ELEMENT, AND CUTTING PROCESS USING SUCH A DEVICE

(30) Priorité: 14.06.2016 FR 1655490
(43) Date de publication de la demande: 17.04.2019
(73) Titulaire: Compagnie Générale des Etablissements Michelin, 63000 Clermont-Ferrand (FR)
(72) Inventeur: BESSAC, Christophe, 63040 Clermont Ferrand Cedex 9 (FR); NAGODE, Clément, 63040 Clermont Ferrand Cedex 9 (FR)
(74) Mandataire: Roussy, Delphine
(86) Numéro de dépôt international: PCT/FR2017/051496
(87) Numéro de publication internationale: WO 2017/216461

(56) Documents cités:
- US-A- 3 808 076
- US-A- 4 206 798

## Description

### DOMAINE TECHNIQUE GENERAL

L'invention se situe dans le domaine de la fabrication de pneumatiques pour véhicules.

La présente invention concerne plus précisément un dispositif de découpe du profil d'une bande de roulement dans un profilé réalisé en un mélange caoutchouteux cru. Plus précisément, la découpe du profil d'une bande de roulement dans le profilé a lieu avant la découpe de ce profilé en différents tronçons, destinés à être apposés sur différentes ébauches de pneumatiques, pour former les bandes de roulement des pneumatiques obtenus à partir de ces ébauches.

L'invention concerne également un procédé de découpe du profil d'une bande de roulement dans un profilé réalisé en un mélange caoutchouteux cru, à l'aide d'un tel dispositif.

### ETAT DE L'ART

Un pneumatique pour la roue d'un véhicule comprend généralement plusieurs nappes de gomme superposées, ainsi qu'une structure métallique ou en fibres textiles constituant une carcasse de renfort de la structure du pneumatique.

Ce pneumatique comprend également une bande de roulement. Cette bande de roulement enveloppe la carcasse et les nappes précitées et elle est destinée à venir au contact du sol. Lors de l'assemblage de l'ébauche de pneumatique, c'est-à-dire du pneumatique avant cuisson la bande de roulement est confectionnée à partir d'un tronçon découpé dans un profilé réalisé dans un mélange caoutchouteux cru, aussi appelé profilé de bande de roulement.

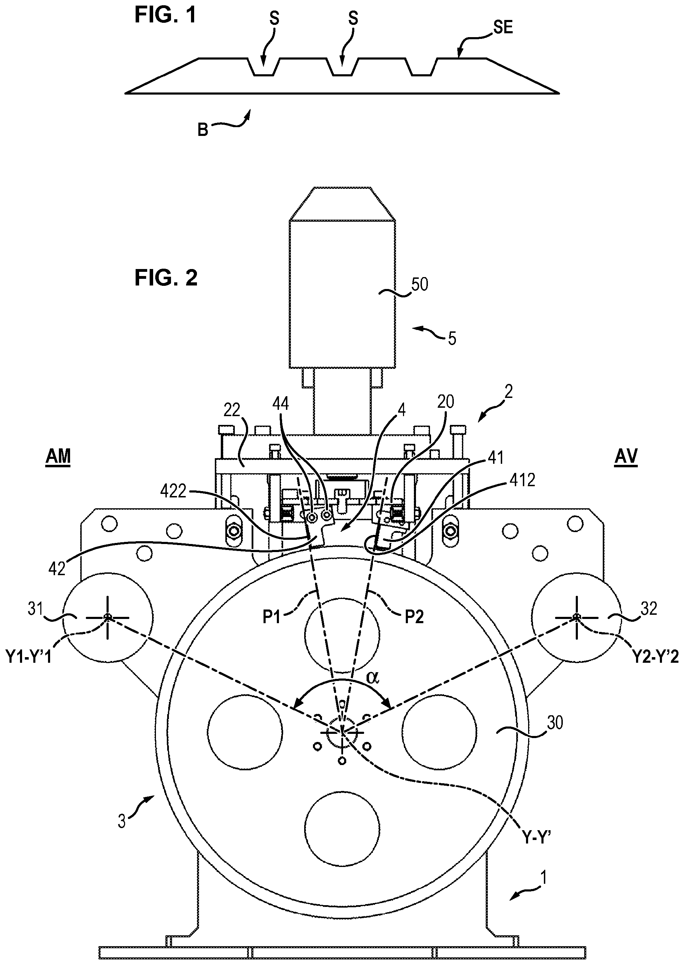

La figure 1 jointe représente de façon schématique la section transversale d'un exemple de réalisation d'un tel profilé de bande de roulement.

Le profilé de bande de roulement B présente une section transversale trapézoïdale, beaucoup plus large que haute et il intègre une pluralité de sillons longitudinaux S, c'est-à-dire des rainures qui s'étendent selon toute sa longueur et sur une certaine profondeur depuis sa surface extérieure SE. La surface extérieure est celle destinée à venir au contact de la route.

Ce profilé de bande de roulement B se présente sous la forme d'une bande d'un mélange caoutchouteux cru, c'est-à-dire qui n'a pas été encore cuit.

Actuellement, le profilé de bande de roulement B est obtenu par extrusion. Son profil d'extrusion final (c'est-à-dire la forme du contour de ce profilé et notamment la forme des sillons S) est donné par une lame d'extrusion située à la sortie de la boudineuse ou de l'extrudeuse, cette lame présentant une découpe sensiblement identique au profil à extruder mais non rigoureusement identique à celui-ci, car il convient de tenir compte du fait que le mélange caoutchouteux ou gomme gonfle légèrement lorsqu'il est à l'état chaud dans l'extrudeuse et se rétracte ensuite immédiatement dès sa sortie de cette dernière.

Lors de la fabrication de pneumatiques, différents profilés de bande de roulement B avec différentes formes de profils doivent être fabriqués. En conséquence, il est nécessaire de concevoir une nouvelle lame d'extrusion à disposer à la sortie de l'extrudeuse pour chaque nouveau profil de profilé de bande de roulement à fabriquer.

En outre, la composition du mélange caoutchouteux du profilé de bande de roulement a un impact sur la géométrie de la lame d'extrusion. Il résulte de ce qui précède qu'une nouvelle lame d'extrusion doit être dessinée et usinée dès que la composition du mélange caoutchouteux est modifiée.

Enfin, et malgré les moyens de modélisation et de simulation disponibles à ce jour, il est généralement nécessaire de réaliser plusieurs prototypes de lames d'extrusion pour obtenir le profil final souhaité du profilé de bande de roulement, avec les tolérances permises, notamment à cause des phénomènes de gonflement et de retrait de la gomme au moment de son extrusion.

On connaît d'après le document US 3 808 076, un dispositif de rechapage de pneumatiques comprenant un dispositif destiné à enlever la bande de roulement usée se trouvant sur la face extérieure de ce pneumatique.

En outre, ce dispositif comprend une filiaire d'extrusion qui permet d'extruder directement un tronçon de profilé de bande de roulement sur le pneu dont la surface extérieure usée a été préalablement retirée comme décrit précédemment. Cette filiaire comprend des doigts qui permettent de former des gorges dans la matière extrudée et des moyens qui permettent de faire osciller ces doigts, perpendiculairement au sens de déplacement du pneumatique, de façon à former des gorges en zig-zag dans le tronçon de profilé de bande de roulement pendant sa formation.

Par ailleurs, ce document décrit également la possibilité de retirer complètement ces doigts, de façon à former un pneu lisse, sans gorges et d'ajouter sur le dispositif, en aval de la filiaire d'extrusion, des couteaux pour découper des gorges.

Toutefois, ce document ne mentionne absolument pas que de tels couteaux pourraient être munis de moyens de mise en vibration.

Enfin, un tel dispositif ne comprend pas de moyens permettant de faire défiler le profilé de bande de roulement avant son application sur la face extérieure du pneumatique, c'est-à-dire lorsqu'il est encore sous forme d'un profilé extrudé indépendant du reste du pneumatique.

### PRESENTATION DE L'INVENTION

L'invention a pour but de résoudre les inconvénients précités de l'état de la technique.

L'invention a notamment pour objectif d'éviter d'avoir à mettre au point une nouvelle lame d'extrusion pour chaque nouveau profil de bandes de roulement et/ou pour chaque nouvelle composition du mélange caoutchouteux et a également pour objectif de supprimer les différentes étapes de mise au point de ces lames d'extrusion.

Un objectif supplémentaire de l'invention est également de proposer un dispositif qui permette de passer d'un profil de bande de roulement à un autre, sans avoir besoin d'arrêter la machine d'extrusion. Ceci est particulièrement important car l'arrêt d'une machine d'extrusion signifie généralement qu'il faut effectuer un nettoyage complet de la machine et de ses buses d'extrusion, avant de pouvoir la redémarrer, et ce afin d'éliminer tous les résidus de gomme qui auraient refroidis à l'intérieur de cette machine d'extrusion.

A cet effet, l'invention concerne un dispositif de découpe du profil d'une bande de roulement pour pneumatique dans un profilé de bande de roulement réalisé en un mélange caoutchouteux cru, et avant la découpe de ce profilé en différents tronçons destinés à la confection des bandes de roulement de différents pneumatiques.

Conformément à l'invention, ce dispositif comprend un bâti supportant un ensemble de coupe et des moyens de défilement permettant de faire défiler ledit profilé à découper en face dudit ensemble de coupe, ledit ensemble de coupe comprenant au moins un couteau de découpe d'un sillon longitudinal dans la face extérieure dudit profilé et des moyens de mise en vibration dudit couteau dans une direction transversale perpendiculaire à la direction de défilement dudit profilé. Le dispositif selon l'invention comprend également une plaque support (20)sous laquelle est ou sont fixé(s) le ou lesdits couteau(x) (4)cette plaque support (20) étant disposée horizontalement ou dans un plan tangent en regard de la face supérieure du profilé (B) de façon que le ou les couteau(x) (4) puisse(nt) y découper un sillon longitudinal (S) et, étant montée à ses deux extrémités latérales sur deux lames de ressorts latérales (21) verticales, chaque lame ressort (21) présentant une extrémité inférieure (212) fixée audit bâti et une extrémité supérieure (211) fixée à ladite plaque support (20), de façon que ladite plaque support (20) puisse se déplacer en va et vient dans une direction transversale perpendiculaire à la direction de défilement (X-X') dudit profilé (B) et ce, sous l'action desdits moyens de mise en vibration (5).

Grâce à ces caractéristiques de l'invention, le profil de la bande de roulement est taillé après sa sortie de l'extrudeuse, à l'aide des couteaux de l'ensemble de coupe. La lame d'extrusion placée à la sortie de l'extrudeuse est alors générique et permet de former une bande de mélange caoutchouteux de section trapézoïdale, et éventuellement rectangulaire. Les différents profils de bande de roulement sont ensuite obtenus en modifiant simplement le nombre, la forme ou la position des couteaux du dispositif de découpe. On règle ainsi le nombre de sillons, leurs positions, largeurs et profondeurs. Ce profil est alors modifiable à souhait, de façon manuelle ou automatique.

On élimine également les étapes de mises au point des prototypes de lame d'extrusion.

Enfin, il n'est plus nécessaire d'arrêter l'extrudeuse lorsque l'on souhaite changer de profil de bande de roulement, il suffit de modifier la position des couteaux alors que le mélange caoutchouteux continue de sortir de l'extrudeuse et de mettre au rébus ou au recyclage la zone transitoire de la bande de roulement.

Selon d'autres caractéristiques avantageuses et non limitatives de l'invention, prises seules ou en combinaison :
- ledit ensemble de coupe comprend un moyen de réglage individuel de la position en hauteur d'un couteau et/ou un moyen de réglage de la position en hauteur de l'ensemble des couteaux lorsqu'il y en a plusieurs et/ou des moyens de réglage de la position transversale du ou desdits couteaux par rapport à ladite direction de défilement dudit profilé ;
- la plaque support présente sur sa face supérieure, une cavité oblongue s'étendant selon la direction de défilement dudit profilé, lesdits moyens de mise en vibration comprennent une plaque de soutien fixe, solidaire dudit bâti, montée au-dessus de ladite plaque support et supportant un actionneur, ledit actionneur comprend un moteur qui entraine en rotation, autour d'un axe vertical, un galet de came monté en excentrique et ledit galet de came est reçu dans la cavité oblongue de sorte que la rotation du galet de came provoque le déplacement de va et vient transversal de ladite plaque support et la mise en vibration du ou des couteaux qu'elle supporte ;
- la plaque support présente sur sa face supérieure, au moins un galet dont la tête est rotative autour d'un axe vertical perpendiculaire à la direction de défilement dudit profilé, lesdits moyens de mise en vibration comprennent une plaque de soutien fixe, solidaire dudit bâti, montée au-dessus de ladite plaque support et supportant un actionneur, ledit actionneur comprend un moteur qui entraine en rotation, autour d'un axe vertical, une came profilée et le ou lesdits galet(s) coopèrent avec le profil de ladite came de sorte que la rotation de la came provoque le déplacement de va et vient transversal de ladite plaque support et la mise en vibration du ou des couteaux qu'elle supporte ;
- le moyen de réglage de la position en hauteur de l'ensemble des couteaux comprend deux plaques de positionnement latérales, chaque plaque de positionnement étant montée coulissante et réglable en hauteur par rapport à un flasque du bâti, la plaque de soutien est fixée à chacune de ses deux extrémités à l'une des deux plaques de positionnement et l'extrémité inférieure de chacune des lames ressorts supportant la plaque support est fixée à l'une des deux plaques de positionnement ;
- le ou les couteaux sont entrainés en vibration selon une fréquence comprise entre 200 Hz et 500 Hz ;
- ledit couteau comprend une lame unique en forme de U dont le fond, destiné à découper le fond du sillon, est disposé parallèlement au plan dudit profilé et dont les deux branches latérales, destinées à découper les flancs du sillon sont verticales ou évasées depuis le fond du U vers le haut du U ;
- ledit couteau comprend une paire de lames respectivement droite et gauche, chaque lame ayant la forme d'un L dont la petite branche destinée à découper au moins une partie du fond du sillon est disposée

parallèlement au plan de la bande de roulement et dont la grande branche destinée à découper l'un des flancs du sillon est verticale ou évasée vers l'extérieur et vers le haut, les deux lames droite et gauche d'une même paire étant fixées l'une derrière l'autre sur une plaque support de l'ensemble coupe selon la direction de défilement dudit profilé, de façon que les découpes que forment leurs petites branches respectives dans le profilé se chevauchent au moins partiellement ;
- l'ensemble de coupe comprend une plaque support disposée horizontalement en regard de la face supérieure dudit profilé, cette plaque support comprend une ou deux fentes transversales perpendiculaires à la direction de défilement dudit profilé, chaque lame d'un couteau est fixée sur un bloc support et chaque bloc support est fixé à ladite plaque support au moyen d'une vis qui traverse la ou les fente(s), la vis et la ou les fentes transversales constituant lesdits moyens de réglage de la position transversale du ou desdits couteau(x);
- ledit bâti comprend deux flasques parallèles espacés l'un de l'autre, lesdits moyens de défilement comprennent un rouleau support et deux rouleaux d'applique, dits "amont" et "aval", de plus petit diamètre que le rouleau support, ledit rouleau support est monté rotatif entre les deux flasques, autour d'un axe de rotation (Y-Y') perpendiculaire à la direction de défilement (X-X') dudit profilé et est disposé sous ledit ensemble de coupe et les deux rouleaux d'applique sont également montés rotatifs entre les deux flasques, autour d'axes de rotation respectifs (Y1-Y'1 ; Y2-Y'2) parallèles à l'axe de rotation (Y-Y') du rouleau support, les deux rouleaux d'applique amont et aval étant disposés de part et d'autre dudit rouleau support de façon à coopérer avec ce dernier pour pincer le profilé et le plaquer contre une portion angulaire de la surface extérieure dudit rouleau support ;
- ledit rouleau support est entrainé en rotation par un moteur ;
- ledit rouleau support comprend un moyen de maintien latéral dudit profilé sur sa surface extérieure, par exemple un dispositif d'aspiration par le vide disposé à l'intérieur dudit rouleau ;
- le rouleau support et/ou au moins l'un des rouleaux d'applique comprend un dispositif de régulation thermique dudit profilé.

L'invention concerne également un procédé de découpe du profil d'une bande de roulement, dans un profilé réalisé en un mélange caoutchouteux cru et avant la découpe de ce profilé en différents tronçons destinés à la confection des bandes de roulement de différents pneumatiques.

Conformément à l'invention, il comprend les étapes consistant à :
- fabriquer un profilé à l'aide d'une extrudeuse,
- découper au moins un sillon longitudinal sur la surface extérieure dudit profilé à l'aide du dispositif précité.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est un schéma représentant une section transversale d'un profilé d'une bande de roulement de pneumatique,
- la figure 2 est une vue de côté du dispositif de découpe du profil dans un profilé de bande de roulement conforme à l'invention,
- la figure 3 est une vue en perspective du dispositif de la figure 2,
- la figure 4 est une vue de détail d'une partie du dispositif des figures 2 et 3,
- la figure 5 est une vue de détail et en perspective d'une paire de lames d'un couteau du dispositif précité,
- la figure 6 est une vue d'ensemble de quatre paires de lames du dispositif conforme à l'invention,
- les figures 7A à 7C sont des schémas en perspective représentant différents modes de réalisation de ces lames de coupe,
- la figure 8 est une vue de côté d'une partie de l'actionneur du dispositif précité,
- la figure 9 est une vue en perspective d'une partie d'un dispositif de découpe de profil dans un profilé d'une bande de roulement selon une variante de réalisation, et
- les figures 10 et 11 sont des vues de détail de deux variantes de réalisation d'une came du dispositif de la figure 9.

### DESCRIPTION DETAILLEE DE L'INVENTION

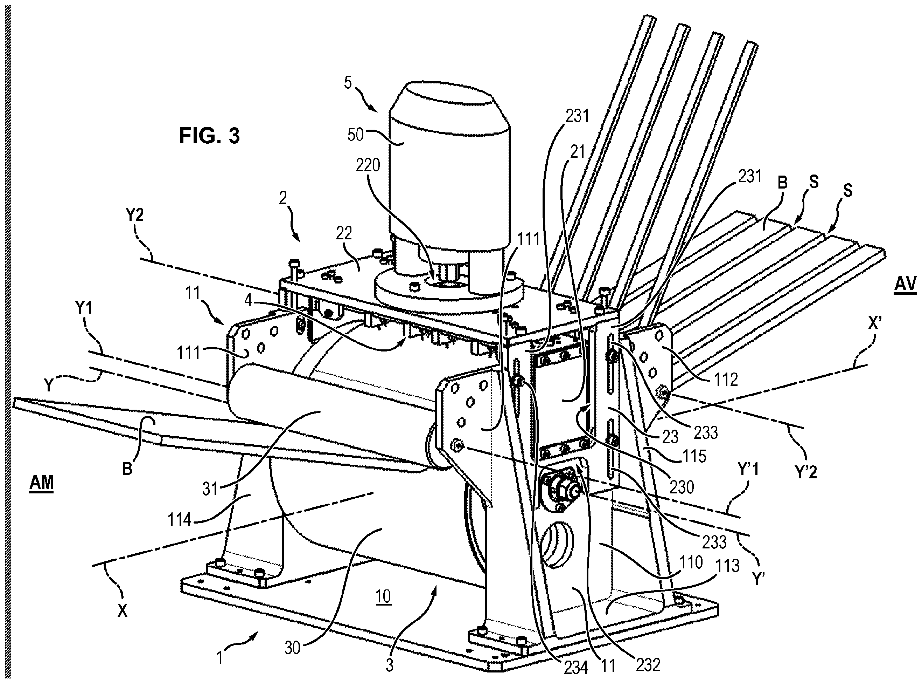

Le dispositif de découpe conforme à l'invention va maintenant être décrit plus en détail en liaison avec les figures 2 et 3.

Il permet de découper le profil d'un profilé d'une bande de roulement pour pneumatique, réalisé en un mélange caoutchouteux cru, pour y former les sillons longitudinaux S.

Comme on peut le voir sur la figure 3, ce profilé de bande de roulement B présente de préférence une section transversale rectangulaire beaucoup plus large qu'épaisse. Bien que cela ne soit pas représenté sur les figures, les biseaux latéraux de ce profilé B (visibles uniquement sur la figure 1) peuvent éventuellement avoir déjà été formés.

Le dispositif conforme à l'invention comprend d'une manière générale un bâti 1, un ensemble de coupe 2 et des moyens de défilement 3 dudit profilé de bande de roulement B, ce profilé étant indépendant, c'est-à-dire non encore monté sur la surface extérieure du pneumatique. Les moyens 3 permettent de faire défiler le profilé à l'intérieur du dispositif, selon une direction de défilement matérialisée par l'axe X-X' et ce, selon un sens de défilement allant de l'amont AM vers l'aval AV.

Un exemple de réalisation de ce bâti 1 va maintenant être décrit.

Le bâti 1 comprend un socle plan 10 sur lequel sont fixés deux flasques latéraux 11 verticaux, parallèles et espacés l'un de l'autre.

De préférence, chaque flasque 11 présente une partie centrale 110 de forme rectangulaire qui se prolonge à sa partie supérieure et de part et d'autre, par une oreille amont 111 et une oreille aval 112.

Le flasque 11 s'étend dans un plan vertical parallèle à l'axe X-X'.

Chaque flasque 11 se prolonge à sa partie inférieure par une embase 113 fixée par tous moyens appropriés sur le socle 10. En outre, le flasque 11 présente avantageusement deux jambes de renforcement amont 114 et aval 115 de forme triangulaire et qui s'étendent perpendiculairement au plan du flasque 11.

Ce bâti est avantageusement réalisé en métal.

Le bâti 1 pourrait également présenter une autre forme.

De préférence, les moyens de défilement 3 comprennent un rouleau support 30 et deux rouleaux d'applique (ou d'embarrage) amont 31 et aval 32, ce dernier n'étant visible que sur la figure 2.

Le rouleau support 30 est de plus grand diamètre que les deux rouleaux d'applique 31 et 32. Le rouleau support 30 est monté rotatif entre les deux flasques latérales 11, autour d'un axe de rotation Y-Y' perpendiculaire à la direction de défilement X-X'.

Par ailleurs, le rouleau d'applique amont 31 est monté rotatif entre les deux oreilles amont 111 des flasques 11, autour d'un axe de rotation Y1-Y'1 parallèle à l'axe Y-Y'.

De façon similaire, le rouleau d'applique aval 112 est monté rotatif entre les deux oreilles aval 112, autour d'un axe de rotation Y2-Y'2, également parallèle à l'axe de défilement Y-Y'.

De préférence, les rouleaux d'applique 31 et 32 sont montés fous. Ils pourraient toutefois éventuellement être motorisés.

Comme on peut le voir sur la figure 2, les rouleaux d'applique 31 et 32 sont disposés de façon que leurs axes de rotation respectifs Y1-Y'1 et Y2-Y'2 soient à une hauteur supérieure à celle de l'axe de rotation Y-Y' du rouleau support 30. Les axes de rotation de ces rouleaux 31, 32 forment ainsi avec l'axe de rotation Y-Y' du rouleau support 30, un angle d'embarrage a, de préférence supérieur à 90°, ce qui favorise le maintien du profilé B sur le rouleau 30.

L'espace entre la surface extérieure des rouleaux d'applique 31 et 32 et la surface extérieure du rouleau support 30 est également adapté de façon à permettre le passage entre les deux, du profilé de bande de roulement B et son plaquage et maintien sur le rouleau support 30.

De façon avantageuse, un tapis aval (non représenté sur les figures) est disposé en aval du dispositif conforme à l'invention. Il est situé sous le profilé de bande de roulement dans lequel les sillons S ont été formés et il soutient celui-ci à la sortie du dispositif de découpe et l'entraine hors du dispositif.

Bien que cela ne soit pas non plus représenté sur les figures, il est également possible de prévoir un tapis amont pour amener le profilé de bande de roulement à l'entrée du dispositif de découpe, c'est-à-dire entre le rouleau d'applique amont 31 et le rouleau support 30.

De façon avantageuse, le rouleau support 30 peut également être entraîné en rotation à l'aide d'un moteur, ce qui limite la tension du profilé de bande de roulement et sa déformation.

De façon avantageuse également, des rouleaux de guidage, non représentés sur les figures, peuvent être prévus de part et d'autre du rouleau d'applique amont 31 et du rouleau d'applique aval 32, afin d'éviter une dérive latérale du profilé de bande de roulement B à l'intérieur du dispositif de découpe.

Enfin, de façon avantageuse, le rouleau support 30 peut être muni d'un dispositif de maintien latéral du profilé de bande de roulement B. Ce dispositif est par exemple un système de préhension par le vide. Dans ce cas, la surface extérieure du rouleau 30 est percée d'une pluralité d'orifices reliés à un dispositif placé à l'intérieur du rouleau 30 et qui permet de créer une dépression. Le profilé de bande de roulement B est ainsi plaqué contre la surface extérieure du rouleau support 30.

Par ailleurs, le rouleau support 30 et/ou les rouleaux d'applique 31, 32 peuvent être munis d'un dispositif de régulation thermique, qui permet, par exemple par circulation d'un fluide réfrigérant à l'intérieur desdits rouleaux, d'éviter un échauffement du profilé de bande de roulement B, échauffement qui pourrait résulter par exemple du frottement de celle-ci entre les rouleaux. Inversement, dans le cas où le matériau à découper est trop froid, on peut également envisager son réchauffement par la circulation d'un fluide chauffant à l'intérieur des rouleaux 30, 31, 32.

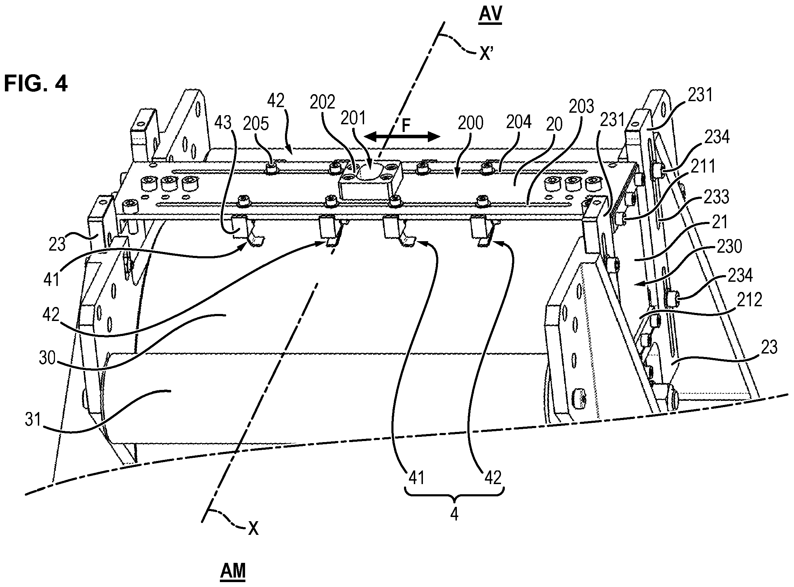

D'autres modes de réalisation des moyens de défilement 3 pourraient également être envisagés, utilisant par exemple uniquement des tapis de convoyage sur sole plane ou non et non des rouleaux. Un exemple de réalisation d'un ensemble de coupe 2 selon l'invention va maintenant être décrit plus en détail en liaison avec les figures 2 et 4.

Cet ensemble de coupe 2 comprend une plaque 20 de support d'au moins un couteau 4 qui assure la découpe des sillons S.

Bien que cela ne soit pas représenté sur les figures, des couteaux additionnels pourraient être prévus pour découper les flancs biseautés latéraux du profilé de bande de roulement.

Cette plaque 20 présente une forme rectangulaire, elle est disposée transversalement par rapport au bâti 1 et au-dessus de la zone la plus haute du rouleau de support 30.

Deux lames ressorts 21 sont fixées respectivement aux deux extrémités latérales de la plaque support 20.

Plus précisément, l'extrémité supérieure 211 de chaque lame ressort 21 est fixée, (par exemple par vissage), aux flancs latéraux de la plaque support 20.

L'ensemble de coupe 2 comprend également un actionneur 5 qui constitue un moyen de mise en vibrations du ou des couteaux 4.

Une plaque de soutien 22 (qui apparaît mieux sur la figure 3) soutient cet actionneur 5. Elle est disposée au-dessus de la plaque support 20.

Selon une première variante de réalisation non représentée sur les figures, la plaque de soutien 22 peut être fixée directement à la partie supérieure des deux flasques 11 du bâti 1. Dans ce cas, l'extrémité inférieure 212 de chaque lame ressort 21 est alors également fixée sur l'un des flasques 11.

Toutefois, selon une variante préférentielle de l'invention représentée sur les figures, l'ensemble de coupe 2 est réglable en hauteur.

Dans ce cas, l'ensemble de coupe 2 comprend également deux plaques latérales de positionnement 23 identiques. Chaque plaque de positionnement 23 présente sensiblement la forme d'un H avec dans sa partie supérieure une découpe en U 230 qui délimite deux branches latérales 231. De préférence, chaque plaque de positionnement 23 est disposée sur la surface extérieure du flasque 11 et entre les deux jambes de renforcement 114, 115.

Les deux extrémités latérales de la plaque de soutien 22 sont fixées, par exemple par vissage, respectivement sur les deux extrémités supérieures des branches 231 de la plaque 23 (voir figure 3).

La plaque de positionnement 23 comprend également au centre de sa partie inférieure une découpe 232 permettant le passage de l'extrémité de l'axe Y-Y' du rouleau de soutien 30.

Par ailleurs, l'extrémité inférieure 212 de la lame ressort 21 est quant à elle fixée dans le fond de la découpe en U 230, par exemple également par vissage.

La plaque de positionnement 23 comprend dans chacune de ses branches 231 au moins une fente verticale 233 de réglage, de préférence deux, alignées verticalement l'une au-dessus de l'autre.

Chaque flasque 1 est percé de quatre orifices filetés, non visibles sur les figures, disposés en regard desdites fentes 233.

Une vis 234 dont la tête est plus large que la largeur de la fente 233 est introduite à l'intérieur de l'orifice fileté, au-travers de ladite fente 233. Par vissage des quatre vis 234 dans les quatre orifices filetés ménagés dans chaque flasque 11, il est ainsi possible de pincer et de verrouiller la plaque de positionnement 23 à une hauteur donnée. Cette position verrouillée en hauteur peut être modifiée en dévissant simplement les vis 234, en déplaçant verticalement la plaque de positionnement 23 jusqu'à la nouvelle position désirée puis en resserrant ensuite les vis 234.

Le déplacement vertical des deux plaques de positionnement 23 assure le déplacement de la plaque de soutien 22 ainsi que le déplacement de la plaque support 20, par déplacement de l'extrémité inférieure 212 des lames ressorts 21. On obtient ainsi le déplacement en hauteur du ou de l'ensemble des couteau(x) 4 monté(s) sur la plaque support 20.

La plaque de positionnement 23 peut également être déplacée en hauteur à l'aide d'autres moyens de réglage, tels que des moyens de coulisses, de crémaillère, etc...

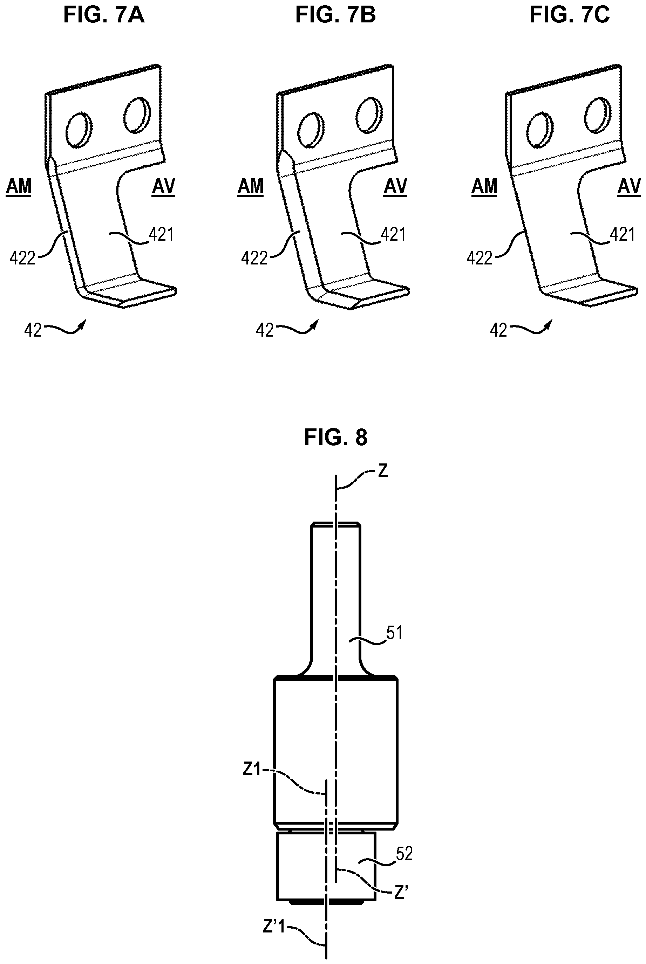

L'actionneur 5 comprend un moteur non visible sur les figures, logé à l'intérieur d'un carter 50, disposé et fixé sur la face supérieure de la plaque de soutien 22. Ce moteur entraîne en rotation, directement ou par l'intermédiaire d'un multiplicateur, un arbre de sortie vertical 51 d'axe de rotation Z-Z', visible sur la figure 8 et perpendiculaire à la direction de défilement X-X' et à l'axe de rotation Y-Y'du rouleau 30.

Un galet de came 52 est monté en excentrique à l'extrémité libre inférieure dudit arbre moteur 51, de sorte que son axe central vertical Z1-Z'1 soit excentré par rapport à l'axe de rotation vertical Z-Z'.

Par ailleurs, comme cela apparaît sur la figure 4, la plaque support 20 présente en son centre une cavité oblongue 201, formée soit directement dans l'épaisseur de la plaque, soit dans une pièce rapportée 202, fixée, par exemple par vissage, sur la face supérieure 200 de la plaque 20. Cette cavité oblongue s'étend selon un axe parallèle à l'axe de défilement X-X'.

La plaque de soutien 22 est percée d'un orifice central 220, au travers duquel passe l'arbre rotatif 51 et le galet de came 52 est positionné à l'intérieur de ladite cavité oblongue 201.

Le galet de came 52 et la cavité oblongue 202 sont dimensionnés, de façon que le mouvement rotatif de l'arbre 51 provoque le déplacement transversal à droite et à gauche de la plaque support 20 (voir double flèche F). Ce mouvement de va-et-vient à gauche et à droite est rendu possible par la flexibilité des lames ressort 21.

Ces lames 21 sont avantageusement réalisées en métal, de préférence en acier (de type acier à ressort 45 SCD6 par exemple avec une résistance mécanique Rm comprise entre 900 MPa et 2000 MPa selon la température de revenu). De façon avantageuse, elles présentent une limite élastique d'au moins 600 MPa et une résistance à la traction supérieure à 800 MPa.

Le moteur de l'actionneur 5 est entraîné en rotation sur une plage de vitesses permettant d'obtenir une fréquence de vibration de la plaque 20 et donc des couteaux 4 comprise de préférence entre 200 Hz et 500 Hz. La mise en vibration des couteaux 4 facilite la découpe des sillons S dans le profilé de bande de roulement.

D'autres moyens de mise en vibration des couteaux pourraient être utilisés.

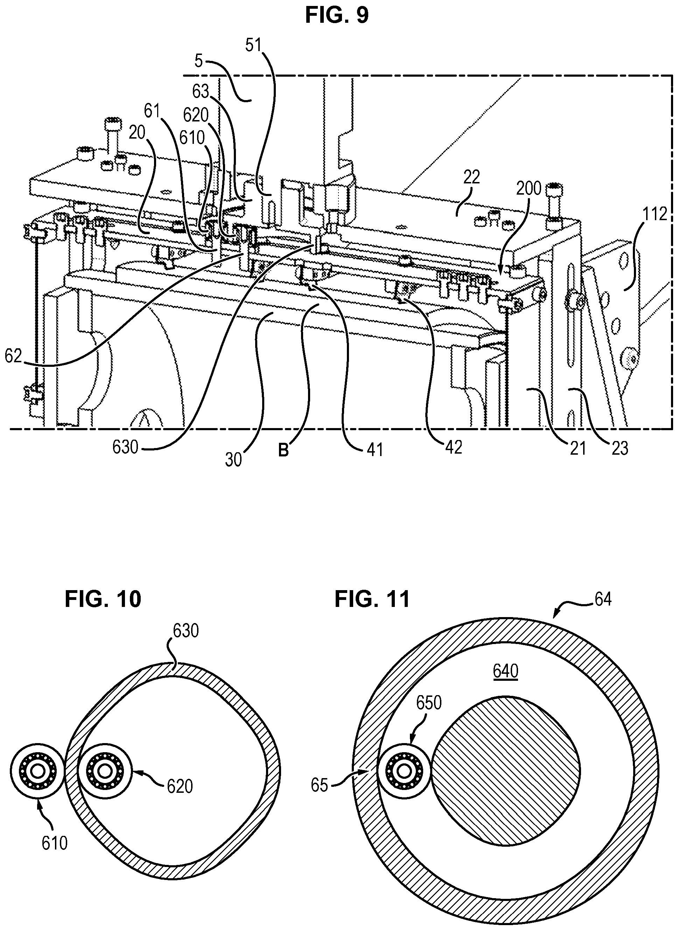

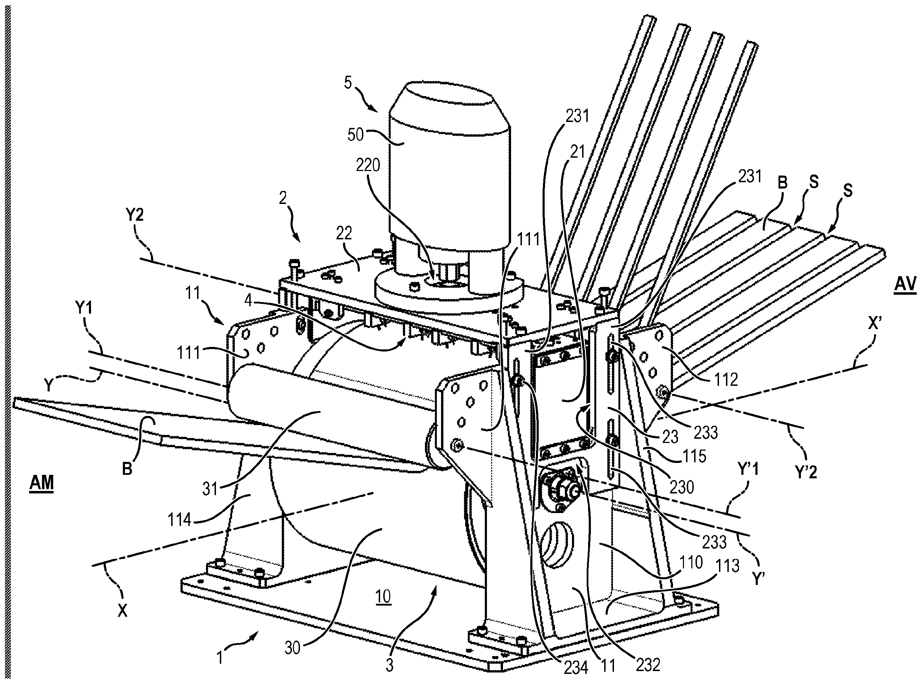

Un autre de ces moyens est représenté sur la figure 9. Les éléments identiques à ceux représentés sur les figures 2 à 4 portent les mêmes références numériques.

La plaque support 20 supporte deux galets 61, 62 dont les têtes 610, 620 font saillies sur sa face supérieure 200 et sont montées rotatives autour d'un axe central.

Une came profilée 63 est solidaire en rotation de l'extrémité de l'arbre de sortie vertical 51 du moteur de l'actionneur 5.

Cette came 63 présente à sa partie inférieure une couronne 630 ayant la forme d'un carré à angles arrondis (voir figure 10). Les deux têtes 610, 620 des galets prennent appui respectivement sur la face extérieure et la face intérieure de cette couronne 630.

La rotation de la came 63 provoque quatre oscillations sinusoïdales, multipliant ainsi par quatre la fréquence de rotation du moteur. En effet, pour un tour de moteur, l'ensemble de coupe 2 effectue quatre mouvements de va-et-vient. Ainsi, par exemple, pour avoir une fréquence de 200Hz, le moteur n'a besoin de tourner qu'à 50Hz, soit 3000tr/min.

Une solution similaire représentée sur la figure 11 consiste à utiliser un unique galet 65 solidaire de la plaque 20 et dont la tête 650 rotative se déplace dans une rainure profilée 640 d'une came 64, entraînée en rotation par l'arbre 51. Un jeu est nécessaire pour que le galet puisse se déplacer dans cette rainure. La rainure présente la forme d'un carré à angles arrondis.

De façon avantageuse, des butées de débattement (non représentées sur les figures) peuvent être fixées sous la face inférieure de la plaque de soutien 22, de façon à empêcher le déplacement de la plaque support 20 selon la direction X-X' et également selon l'axe vertical Z-Z', de façon à éviter tout « sautillement » vertical des couteaux 4.

Les couteaux 4 sont fixés sous la surface de la plaque support 20, d'une façon qui sera décrite ultérieurement.

Les couteaux 4 peuvent se présenter sous deux formes.

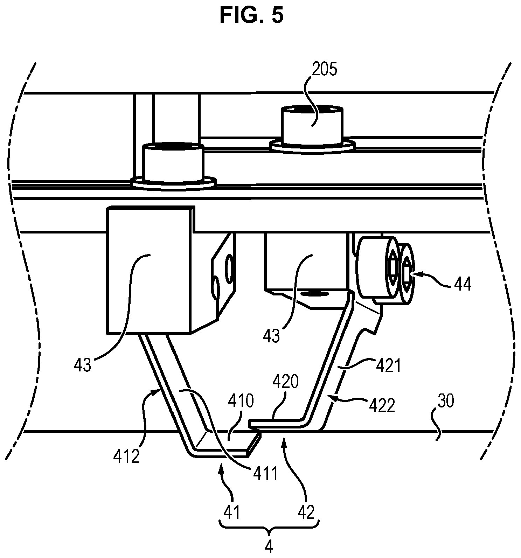

Selon un premier mode de réalisation représenté sur la figure 5, le couteau 4 comprend une paire de lames 41, 42 qui conjointement, permettent de découper un sillon S.

Selon une autre variante de réalisation non représentée sur les figures, le couteau 4 peut être composé d'une unique lame dont le contour correspond à celui du sillon à découper.

Les lames des couteaux sont avantageusement en acier.

Sur la figure 5, on peut voir que chaque lame gauche 41, droite 42 d'une paire présente la forme générale d'un L, dont la petite branche 410, respectivement 420, permet la découpe du fond du sillon et dont la grande branche 411, respectivement 421, permet la découpe du flanc gauche, respectivement droit du sillon S.

De préférence, les grandes branches 411, respectivement 421 sont inclinées depuis la petite branche 410, respectivement 420, vers le haut et vers l'extérieur. Toutefois, on notera que les grandes branches 411, 421 pourraient également être à angle droit par rapport aux petites branches 410, 420.

Chaque lame 41, 42 présente un bord d'attaque en L (arête de coupe) 412, respectivement 422, orienté vers l'amont du dispositif de découpe. Il en est de même lorsque le couteau est constitué d'une seule lame.

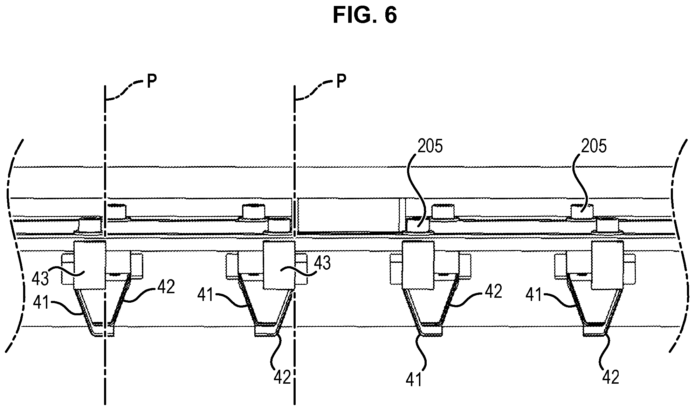

Pour une paire de lames donnée, on notera que les lames gauche 41 et droite 42 sont disposées successivement l'une derrière l'autre et de part et d'autre d'un plan vertical médian P, visible sur la figure 6, et qui passe également par le centre du fond du sillon S. Les lames 41 et 42 sont disposées de façon que leurs petites branches 410, 420 couvrent des zones de découpe de fond du sillon qui se chevauchent au moins partiellement.

Lorsqu'il est nécessaire de faire plusieurs sillons dans le profilé de bande de roulement B, par exemple quatre sillons dans l'exemple représenté sur la figure 6, on notera que de façon avantageuse, les lames gauche 41 de la première et de la troisième paires de lames sont par exemple disposées vers l'amont, tandis que les lames droite 42 de ces mêmes paires sont disposées vers l'aval et qu'inversement pour la deuxième et la quatrième paires de lames, ce sont au contraire les lames droite 42 qui sont disposée vers l'amont tandis que les lames gauche 41 de ces mêmes paires sont disposées vers l'aval. Ceci permet d'éviter les tensions ou les déformations dans le profilé de bande de roulement lors du défilement de celui-ci.

De façon avantageuse, et comme on peut le voir sur la figure 4, la position transversale de chaque lame et de chaque paire de lames par rapport à la plaque support 20 est réglable.

A cet effet, on notera que chaque lame gauche 41, respectivement droite 42, est montée sur un bloc support 43 dont la face supérieure est percée d'un orifice taraudé non visible sur les figures.

Par ailleurs, la plaque support 20 comprend deux fentes transversales parallèles, à savoir une fente amont 203 et une fente aval 204.

Une vis 205 dont la tête est plus large que la largeur des fentes 203, 204 peut être insérée dans l'orifice taraudé du bloc support 43, de sorte que le corps de vis traverse la fente 203 ou la fente 204.

On comprend aisément qu'en vissant la vis 205 au travers de la fente 203 ou 204, il est possible d'immobiliser le bloc support 43 par rapport à la plaque 20 et qu'inversement en dévissant la vis 205, il est possible de faire coulisser vers la droite ou vers la gauche le bloc 43, le long des fentes 203, 204.

Pour une même paire de lames 41, 42, il est ainsi possible de positionner les lames gauche 41 et droite 42 de façon à qu'elles soient plus ou moins écartées l'une de l'autre, ce qui permet d'obtenir ainsi un sillon S plus ou moins large.

Ainsi, sur la figure 6, on notera que les lames gauche 41 et droite 42 sont disposées de façon que leurs petites branches 410, respectivement 420, soient situées l'une derrière l'autre, ce qui permet d'obtenir un sillon étroit.

Inversement, sur la figure 5, on notera que les lames gauche 41 et droite 42 sont écartées davantage l'une de l'autre, de sorte que le sillon obtenu est plus large.

Par ailleurs, le même dispositif de fentes 203, 204 et de vis 205 permet de positionner chaque paire de lames en un point donné de la plaque support 20, de façon à définir la position transversale des différents sillons sur le profilé de bande de roulement B.

Lorsque le couteau 4 est constitué d'une seule lame, celle-ci présente avantageusement la forme d'un U dont le fond est plan et dont les deux branches latérales sont de préférence évasées vers l'extérieur. Dans ce cas, la plaque support 20 comprend une seule fente transversale et seule la position transversale du couteau par rapport à la plaque support 20 et donc le profilé de bande de roulement peut être modifiée. La largeur du sillon obtenu est fixe et dépendante de la forme de la lame unique.

D'autres moyens de positionnement transversal des couteaux 4 sont également envisageables, tels que des systèmes de coulisse. En outre, le positionnement transversal des couteaux précédemment décrit est manuel. Il pourrait également être motorisé et automatisé par recette, c'est-à-dire par un pilotage des actionneurs par l'intermédiaire d'un programme informatique déclinant les bons paramètres procédé pour l'obtention optimale de la découpe

Que le couteau présente une ou deux lames, son bord d'attaque peut présenter différentes formes dont trois exemples de réalisation sont représentés sur les figures 7A à 7C.

Sur ces figures, les lames droite 42 sont représentées vues en perspective.

Sur la variante de réalisation de la figure 7A, le bord d'attaque 422 est constitué d'un double biseau dont l'arête médiane saillante est orientée vers la gauche de la figure (vers l'amont).

Sur la figure 7B, le bord d'attaque 422 est un biseau simple qui s'étend depuis l'amont AM vers l'aval AV en direction de la face intérieure de cette branche 421.

Inversement, dans le mode de réalisation de la figure 7C, le bord d'attaque 422 présente un unique biseau qui s'étend depuis l'amont AM vers l'aval AV en direction de la face extérieure de cette grande branche 421.

Le choix de la forme de ce bord d'attaque sera fonction de la nature du matériau constituant le profilé de bande de roulement B.

De préférence, et comme on peut le voir sur la figure 2, les bords d'attaque 422 des différentes lames droite 42 sont alignés dans un plan P1 et/ou P2 radial au rouleau support 30. De même, les bords d'attaque 412 des lames gauche 41 sont alignés dans un plan P1 et/ou P2 radial au rouleau support 30. Pour ce faire, les lames 41, 42 sont fixées par rapport au bloc support 43, de façon à être légèrement inclinées. Cette fixation s'effectue par exemple à l'aide de deux vis 44.

De préférence, deux lames droite 42 et deux lames gauche 41 sont alignées dans un premier plan P1 radial, et deux autres lames droite 42 et deux autres lames gauche 41 sont alignées dans un deuxième plan P2 radial et distinct du premier plan.

Enfin, de façon avantageuse, et bien que cela ne soit pas représenté sur les figures, il est également possible de prévoir un dispositif de réglage en hauteur individuel de chaque lame gauche 41 ou droite 42 par rapport au bloc support 43, ce qui peut permettre d'obtenir des sillons S de profondeur différente sur un même profilé de bande de roulement. Chaque lame 41, 42 peut par exemple être montée coulissante verticalement par rapport au bloc 43.

## Revendications

1. Dispositif de découpe du profil d'une bande de roulement pour pneumatique, dans un profilé de bande roulement (B) réalisé en un mélange caoutchouteux cru, et avant la découpe de ce profilé en différents tronçons destinés à la confection des bandes de roulement de différents pneumatiques, ce dispositif comprenant un bâti (1) supportant un ensemble de coupe (2) et des moyens de défilement (3) permettant de faire défiler ledit profilé (B) à découper en face dudit ensemble de coupe (2), ledit ensemble de coupe comprenant au moins un couteau (4) de découpe d'un sillon longitudinal (S) dans la face extérieure dudit profilé (B) et des moyens (5) de mise en vibration dudit couteau (4) dans une direction transversale perpendiculaire à la direction de défilement (X-X') dudit profilé et ce dispositif de découpe étant **caractérisé en ce que** l'ensemble de coupe (2) comprend une plaque support (20) sous laquelle est ou sont fixé(s) le ou lesdits couteau(x) (4), cette plaque support (20) étant disposée horizontalement ou dans un plan tangent en regard de la face supérieure du profilé (B) de façon que le ou les couteau(x) (4) puisse(nt) y découper un sillon longitudinal (S), et étant montée à ses deux extrémités latérales sur deux lames ressorts latérales (21) verticales, chaque lame ressort (21) présentant une extrémité inférieure (212) fixée audit bâti et une extrémité supérieure (211) fixée à ladite plaque support (20), de façon que ladite plaque support (20) puisse se déplacer en va et vient dans une direction transversale perpendiculaire à la direction de défilement (X-X') dudit profilé (B) et ce, sous l'action desdits moyens de mise en vibration (5).

2. Dispositif selon la revendication 1, **caractérisé en ce que** ledit ensemble de coupe (2) comprend un moyen de réglage individuel de la position en hauteur d'un couteau (4) et/ou un moyen de réglage (23, 233) de la position en hauteur de l'ensemble des couteaux (4) lorsqu'il y en a plusieurs et/ou des moyens de réglage (203, 204, 205) de la position transversale du ou desdits couteaux (4) par rapport à ladite direction de défilement (X-X') dudit profilé.

3. Dispositif selon la revendication 1 ou 2, **caractérisé en ce que** la plaque support (20) présente sur sa face supérieure (200), une cavité oblongue (201) s'étendant selon la direction de défilement (X-X') dudit profilé (B), **en ce que** lesdits moyens de mise en vibration comprennent une plaque de soutien fixe (22), solidaire dudit bâti (1), montée au-dessus de ladite plaque support (20) et supportant un actionneur (5), **en ce que** ledit actionneur (5) comprend un moteur qui entraine en rotation, autour d'un axe vertical, un galet de came (52) monté en excentrique et **en ce que** ledit galet de came (52) est reçu dans la cavité oblongue (201) de sorte que la rotation du galet de came (52) provoque le déplacement de va et vient transversal de ladite plaque support (20) et la mise en vibration du ou des couteaux (4) qu'elle supporte.

4. Dispositif selon la revendication 1 ou la revendication 2, **caractérisé en ce que** la plaque support (20) présente sur sa face supérieure (200), au moins un galet (61, 62, 65) dont la tête (610, 620, 650) est rotative autour d'un axe vertical perpendiculaire à la direction de défilement (X-X') dudit profilé (B), **en ce que** lesdits moyens de mise en vibration comprennent une plaque de soutien fixe (22), solidaire dudit bâti (1), montée au-dessus de ladite plaque support (20) et supportant un actionneur (5), **en ce que** ledit actionneur (5) comprend un moteur qui entraine en rotation, autour d'un axe vertical, une came (63, 64) profilée et **en ce que** le ou lesdits galet(s) (61, 62, 65) coopèrent avec le profil de ladite came (63, 64) de sorte que la rotation de la came (63, 64) provoque le déplacement de va et vient transversal de ladite plaque support (20) et la mise en vibration du ou des couteaux (4) qu'elle supporte.

5. Dispositif selon la revendication 2 et la revendication 3, **caractérisé en ce que** le moyen de réglage de la position en hauteur de l'ensemble des couteaux (4) comprend deux plaques de positionnement (23) latérales, chaque plaque de positionnement (23) étant montée coulissante et réglable en hauteur par rapport à un flasque (11) du bâti (1), **en ce que** la plaque de soutien (22) est fixée à chacune de ses deux extrémités à l'une des deux plaques de positionnement (23) et **en ce que** l'extrémité inférieure de chacune des lames ressorts (21) supportant la plaque support (20) est fixée à l'une des deux plaques de positionnement (23).

6. Dispositif selon l'une des revendications précédentes, **caractérisé en ce que** le ou les couteaux (4) sont entrainés en vibration selon une fréquence comprise entre 200 Hz et 500 Hz.

7. Dispositif selon l'une des revendications précédentes, **caractérisé en ce que** ledit couteau (4) comprend une lame unique en forme de U dont le fond, destiné à découper le fond du sillon (S), est disposé parallèlement au plan dudit profilé (B) et dont les deux branches latérales, destinées à découper les flancs du sillon (S), sont verticales ou évasées depuis le fond du U vers le haut du U.

8. Dispositif selon l'une des revendications 1 à 6, **caractérisé en ce que** ledit couteau (4) comprend une paire de lames respectivement droite (42) et gauche (41), chaque lame (41, 42) ayant la forme d'un L dont la petite branche (410, 420) destinée à découper au moins une partie du fond du sillon (S) est disposée parallèlement au plan de la bande de roulement (B) et dont la grande branche (411, 421), destinée à découper l'un des flancs du sillon (S), est verticale ou évasée vers l'extérieur et vers le haut, les deux lames droite (42) et gauche (41) d'une même paire étant fixées l'une derrière l'autre sur une plaque support (20) de l'ensemble coupe (2) selon la direction de défilement (X-X') dudit profilé (B), de façon que les découpes que forment leurs petites branches respectives (410, 420) dans le profilé se chevauchent au moins partiellement.

9. Dispositif selon les revendications 2 et 7 ou selon les revendications 2 et 8, **caractérisé en ce que** l'ensemble de coupe (2) comprend une plaque support (20) disposée horizontalement en regard de la face supérieure du profilé (B), **en ce que** cette plaque support (20) comprend une ou deux fentes transversales (203, 204) perpendiculaires à la direction de défilement (X-X') dudit profilé, **en ce que** chaque lame d'un couteau (4) est fixée sur un bloc support (43) et **en ce que** chaque bloc support (43) est fixé à ladite plaque support (20) au moyen d'une vis (205) qui traverse la ou les fente(s) (203, 204), la vis (205) et la ou les fentes transversales (203, 204) constituant lesdits moyens de réglage (203, 204) de la position transversale du ou desdits couteau(x) (4).

10. Dispositif selon l'une des revendications précédentes, **caractérisé en ce que** ledit bâti (1) comprend deux flasques parallèles (11) espacés l'un de l'autre, **en ce que** lesdits moyens de défilement (3) comprennent un rouleau support (30) et deux rouleaux d'applique, dits "amont" (31) et "aval" (32), de plus petit diamètre que le rouleau support, **en ce que** ledit rouleau support (30) est monté rotatif entre les deux flasques (11), autour d'un axe de rotation (Y-Y') perpendiculaire à la direction de défilement (X-X') dudit profilé (B) et est disposé sous ledit ensemble de coupe (2) et **en ce que** les deux rouleaux d'applique (31, 32) sont également montés rotatifs entre les deux flasques(11), autour d'axes de rotation respectifs (Y1-Y'1 ; Y2-Y'2) parallèles à l'axe de rotation (Y-Y') du rouleau support (30), les deux rouleaux d'applique amont (31) et aval (32) étant disposés de part et d'autre dudit rouleau support (30) de façon à coopérer avec ce dernier pour pincer le profilé (B) et le plaquer contre une portion angulaire de la surface extérieure dudit rouleau support (30).

11. Dispositif selon la revendication 10, **caractérisé en ce que** ledit rouleau support (30) est entrainé en rotation par un moteur.

12. Dispositif selon la revendication 10 ou 11, **caractérisé en ce que** ledit rouleau support (30) comprend un moyen de maintien latéral dudit profilé (B) sur sa surface extérieure, tel qu'un dispositif d'aspiration par le vide disposé à l'intérieur dudit rouleau.

13. Dispositif selon l'une des revendications 10 à 12, **caractérisé en ce que** le rouleau support et/ou au moins l'un des rouleaux d'applique (31, 32) comprend un dispositif de régulation thermique dudit profilé (B).

14. Procédé de découpe du profil d'une bande de roulement dans un profilé (B) réalisé en un mélange caoutchouteux cru et avant la découpe de ce profilé en différents tronçons destinés à la confection des bandes de roulement de différents pneumatiques, **caractérisé en ce qu'**il comprend les étapes consistant à :
- fabriquer un profilé (B) à l'aide d'une extrudeuse,
- découper au moins un sillon longitudinal (S) sur la surface extérieure dudit profilé (B) à l'aide du dispositif selon l'une quelconque des revendications précédentes.

## Patentansprüche

1. Vorrichtung zum Schneiden des Profils eines Laufstreifens für einen Luftreifen in einem aus einer Rohkautschukmischung hergestellten Laufstreifen-Profilteil (B) und vor dem Zerschneiden dieses Profilteils in verschiedene Abschnitte, die zur Konfektion der Laufstreifen verschiedener Luftreifen bestimmt sind, wobei diese Vorrichtung ein Gestell (1) enthält, das eine Schneideinheit (2) und Durchlaufeinrichtungen (3) trägt, die es ermöglichen, das zu schneidende Profilteil (B) vor der Schneideinheit (2) durchlaufen zu lassen, wobei die Schneideinheit mindestens ein Schneidmesser (4) zum Schneiden einer Längsrille (S) in die Außenseite des Profilteils (B) und Einrichtungen (5) enthält, um das Schneidmesser (4) in einer Querrichtung lotrecht zur Durchlaufrichtung (X-X') des Profilteils vibrieren zu lassen, und wobei diese Schneidevorrichtung **dadurch gekennzeichnet ist, dass** die Schneideinheit (2) eine Tragplatte (20) enthält, unter der das oder die Schneidmesser (4) befestigt ist(sind), wobei diese Tragplatte (20) waagrecht oder in einer tangierenden Ebene gegenüber der Oberseite des Profilteils (B) so angeordnet ist, dass das oder die Schneidmesser (4) dort eine Längsrille (S) schneiden kann(können), und an ihren zwei seitlichen Enden auf zwei senkrechte seitliche Blattfedern (21) montiert ist, wobei jede Blattfeder (21) ein am Gestell befestigtes unteres Ende (212) und ein an der Tragplatte (20) befestigtes oberes Ende (211) aufweist, damit die Tragplatte (20) sich in einer Querrichtung lotrecht zur Durchlaufrichtung (X-X') des Profilteils (B) hin und her verschieben kann, und dies unter der Einwirkung der Vibriereinrichtungen (5).

2. Vorrichtung nach Anspruch 1, **dadurch gekennzeichnet, dass** die Schneideinheit (2) eine individuelle Einstelleinrichtung der Höhenposition eines Schneidmessers (4) und/oder eine Einstelleinrichtung (23, 233) der Höhenposition der Gesamtheit der Schneidmesser (4), wenn es mehrere gibt, und/oder Einstelleinrichtungen (203, 204, 205) der Querposition des oder der Schneidmesser (4) bezüglich der Durchlaufrichtung (X-X') des Profilteils enthält.

3. Vorrichtung nach Anspruch 1 oder 2, **dadurch gekennzeichnet, dass** die Tragplatte (20) an ihrer Oberseite (200) einen länglichen Hohlraum (201) aufweist, der sich gemäß der Durchlaufrichtung (X-X') des Profilteils (B) erstreckt, dass die Vibriereinrichtungen eine fest mit dem Gestell (1) verbundene ortsfeste Stützplatte (22) enthalten, die über der Tragplatte (20) montiert ist und ein Stellglied (5) trägt, dass das Stellglied (5) einen Motor enthält, der eine exzentrisch montierte Kurvenrolle (52) um eine senkrechte Achse in Drehung versetzt, und dass die Kurvenrolle (52) in dem länglichen Hohlraum (201) aufgenommen wird, so dass die Drehung der Kurvenrolle (52) die Hin- und Herverschiebung der Tragplatte (20) in Querrichtung und das Vibrieren des oder der Schneidmesser (4) bewirkt, das(die) sie trägt.

4. Vorrichtung nach Anspruch 1 oder Anspruch 2, **dadurch gekennzeichnet, dass** die Tragplatte (20) an ihrer Oberseite (200) mindestens eine Rolle (61, 62, 65) aufweist, deren Kopf (610, 620, 650) um eine senkrechte Achse lotrecht zur Durchlaufrichtung (X-X') des Profilteils (B) drehbar ist, dass die Vibriereinrichtungen eine fest mit dem Gestell (1) verbundene ortsfeste Stützplatte (22) enthalten, die über der Tragplatte (20) montiert ist und ein Stellglied (5) trägt, dass das Stellglied (5) einen Motor enthält, der eine profilierte Nockenscheibe (63, 64) um eine senkrechte Achse in Drehung versetzt, und dass die Rolle(n) (61, 62, 65) mit dem Profil der Nockenscheibe (63, 64) zusammenwirkt(zusammenwirken), damit die Drehung der Nockenscheibe (63, 64) die Hin- und Herverschiebung der Tragplatte (20) in Querrichtung und das Vibrieren des oder der Schneidmesser (4) bewirkt, die sie trägt.

5. Vorrichtung nach Anspruch 2 und Anspruch 3, **dadurch gekennzeichnet, dass** die Einstelleinrichtung der Höhenposition der Gesamtheit der Schneidmesser (4) zwei seitliche Positionierplatten (23) enthält, wobei jede Positionierplatte (23) gleitend und höhenverstellbar bezüglich eines Flanschs (11) des Gestells (1) montiert ist, dass die Stützplatte (22) an jedem ihrer beiden Enden an einer der zwei Positionierplatten (23) befestigt ist, und dass das untere Ende jeder der die Tragplatte (20) tragenden Blattfedern (21) an einer der zwei Positionierplatten (23) befestigt ist.

6. Vorrichtung nach einem der vorhergehenden Ansprüche, **dadurch gekennzeichnet, dass** das oder die Schneidmesser (4) gemäß einer Frequenz zwischen 200 Hz und 500 Hz in Vibration versetzt werden.

7. Vorrichtung nach einem der vorhergehenden Ansprüche, **dadurch gekennzeichnet, dass** das Schneidmesser (4) eine einzige U-förmige Klinge enthält, deren Boden, der dazu bestimmt ist, den Boden der Rille (S) zu schneiden, parallel zur Ebene des Profilteils (B) angeordnet ist, und deren zwei Seitenschenkel, die dazu bestimmt sind, die Flanken der Rille (S) zu schneiden, senkrecht oder vom Boden des U zur Oberseite des U ausgestellt sind.

8. Vorrichtung nach einem der Ansprüche 1 bis 6, **dadurch gekennzeichnet, dass** das Schneidmesser (4) ein Paar von rechten (42) bzw. linken (41) Klingen enthält, wobei jede Klinge (41, 42) die Form eines L hat, dessen kleiner Schenkel (410, 420), der dazu bestimmt ist, mindestens einen Teil des Bodens der Rille (S) zu schneiden, parallel zur Ebene des Laufstreifens (B) angeordnet ist, und dessen großer Schenkel (411, 421), der dazu bestimmt ist, eine der Flanken der Rille (S) zu schneiden, senkrecht oder nach außen und nach oben ausgestellt ist, wobei die zwei rechten (42) und linken (41) Klingen eines gleichen Paars hintereinander an einer Tragplatte (20) der Schneideinheit (2) gemäß der Durchlaufrichtung (X-X') des Profilteils (B) befestigt sind, damit die Schnitte, die ihre kleinen Schenkel (410, 420) im Profilteil formen, sich zumindest teilweise überlappen.

9. Vorrichtung nach den Ansprüchen 2 und 7 oder nach den Ansprüchen 2 und 8, **dadurch gekennzeichnet, dass** die Schneideinheit (2) eine Tragplatte (20) enthält, die waagrecht gegenüber der Oberseite des Profilteils (B) angeordnet ist, dass diese Tragplatte (20) einen oder zwei Querschlitze (203, 204) lotrecht zur Durchlaufrichtung (X-X') des Profilteils enthält, dass jede Klinge eines Schneidmessers (4) an einem Tragblock (43) befestigt ist, und dass jeder Tragblock (43) an der Tragplatte (20) mittels einer Schraube (205) befestigt ist, die den(die) Schlitz(e) (203, 204) durchquert, wobei die Schraube (205) und der oder die Querschlitze (203, 204) die Einstelleinrichtungen (203, 204) der Querposition des Schneidmessers oder der Schneidmesser (4) bilden.

10. Vorrichtung nach einem der vorhergehenden Ansprüche, **dadurch gekennzeichnet, dass** das Gestell (1) zwei voneinander entfernte parallele Flansche (11) enthält, dass die Durchlaufeinrichtungen (3) eine Tragwalze (30) und zwei Anlegewalzen enthalten, eine sogenannte "stromaufwärtige" (31) und eine sogenannte "stromabwärtige" (32), von kleinerem Durchmesser als die Tragwalze, dass die Tragwalze (30) zwischen den zwei Flanschen (11) um eine Drehachse (Y-Y') lotrecht zur Durchlaufrichtung (X-X') des Profilteils (B) drehbar montiert und unter der Schneideinheit (2) angeordnet ist, und dass die zwei Anlegewalzen (31, 32) ebenfalls zwischen den zwei Flanschen (11) um jeweilige Drehachsen (Y1-Y'1; Y2-Y'2) parallel zur Drehachse (Y-Y') der Tragwalze (30) drehbar montiert sind, wobei die zwei Anlegewalzen, die stromaufwärtige (31) und die stromabwärtige (32), zu beiden Seiten der Tragwalze (30) angeordnet sind, um mit dieser letzteren zusammenzuwirken, um das Profilteil (B) einzuklemmen und es gegen einen Winkelabschnitt der Außenfläche der Tragwalze (30) anzudrücken.

11. Vorrichtung nach Anspruch 10, **dadurch gekennzeichnet, dass** die Tragwalze (30) von einem Motor in Drehung versetzt wird.

12. Vorrichtung nach Anspruch 10 oder 11, **dadurch gekennzeichnet, dass** die Tragwalze (30) eine Einrichtung für den seitlichen Halt des Profilteils (B) auf ihrer Außenfläche enthält, wie eine Vakuumansaugvorrichtung, die im Inneren der Walze angeordnet ist.

13. Vorrichtung nach einem der Ansprüche 10 bis 12, **dadurch gekennzeichnet, dass** die Tragwalze und/oder mindestens eine der Anlegewalzen (31, 32) eine Vorrichtung zur Wärmeregulierung des Profilteils (B) enthalten.

14. Verfahren zum Schneiden des Profils eines Laufstreifens in einem aus einer Rohkautschukmischung hergestellten Profilteil (B) und vor dem Schneiden dieses Profilteils in verschiedene Abschnitte, die zur Konfektion der Laufstreifen verschiedener Luftreifen bestimmt sind, **dadurch gekennzeichnet, dass** es die Schritte enthält, die darin bestehen:
- Herstellen eines Profilteils (B) mit Hilfe eines Extruders,
- Schneiden mindestens einer Längsrille (S) an der Außenfläche des Profilteils (B) mit Hilfe der Vorrichtung nach einem der vorhergehenden Ansprüche.

## Claims

1. Device for cutting the profile of a tyre tread in a tyre tread profiled element (B) made of a raw rubber mixture, and before cutting this profiled element into various sections intended for the fabrication of tyre treads of various tyres, **characterized in that** it comprises a frame (1) supporting a cutting assembly (2) and travel means (3) making it possible for said profiled element (B) to be cut to travel in front of said cutting assembly (2), said cutting assembly comprising at least one cutter (4) for cutting a longitudinal groove (S) in the outer face of said profiled element (B) and means (5) for inducing vibration in said cutter (4) in a transverse direction perpendicular to the direction of travel (X-X') of said profiled element, and the cutting assembly (2) comprising a support plate (20) below which said cutter(s) (4) is or are fixed, this support plate (20) being arranged horizontally or in a tangent plane opposite the upper face of the profiled element (B) in such a way that the cutter(s) (4) can cut a longitudinal groove (S) therein, and being mounted at its two lateral ends on two vertical lateral spring blades (21), each spring blade (21) having a lower end (212) fastened to said frame and an upper end (211) fastened to said support plate (20), in such a way that said support plate (20) can move back and forth in a transverse direction perpendicular to the direction of travel (X-X') of said profiled element (B), under the action of said vibration-inducing means (5).

2. Device according to Claim 1, **characterized in that** said cutting assembly (2) comprises a means for individual adjustment of the height position of a cutter (4) and/or a means (23, 233) for adjustment of the height position of all the cutters (4) when there is a plurality thereof and/or means (203, 204, 205) for adjustment of the transverse position of said cutter(s) (4) with respect to said direction of travel (X-X') of said profiled element.

3. Device according to Claim 1 or 2, **characterized in that** the support plate (20) has on its upper face (200) an oblong cavity (201) extending in the direction of travel (X-X') of said profiled element (B), **in that** said vibration-inducing means comprise a fixed supporting plate (22), secured to said frame (1), mounted above said support plate (20) and supporting an actuator (5), **in that** said actuator (5) comprises a motor which drives an eccentrically mounted cam roller (52) in rotation about a vertical axis, and **in that** said cam roller (52) is received in the oblong cavity (201) such that the rotation of the cam roller (52) causes the transverse back-and-forth movement of said support plate (20) and the vibration inducement in the cutter(s) (4) which it supports.

4. Device according to Claim 1 or 2, **characterized in that** the support plate (20) has on its upper face (200) at least one roller (61, 62, 65) of which the head (610, 620, 650) is rotatable about a vertical axis perpendicular to the direction of travel (X-X') of said profiled element (B), **in that** said vibration inducing means comprise a fixed supporting plate (22), secured to said frame (1), mounted above said support plate (20) and supporting an actuator (5), **in that** said actuator (5) comprises a motor which drives a profiled cam (63, 64) in rotation about a vertical axis, and **in that** said roller(s) (61, 62, 65) cooperate with the profile of said cam (63, 64) such that the rotation of the cam (63, 64) causes the transverse back-and-forth movement of said support plate (20) and the vibration inducement in the cutter(s) (4) which it supports.

5. Device according to Claims 2 and 3, **characterized in that** the means for adjustment of the height position of all the cutters (4) comprises two lateral positioning plates (23), each positioning plate (23) being mounted in a sliding and height-adjustable manner with respect to a cheek (11) of the frame (1), **in that** the supporting plate (22) is fastened at each of its two ends to one of the two positioning plates (23), and **in that** the lower end of each of the spring blades (21) supporting the support plate (20) is fastened to one of the two positioning plates (23).

6. Device according to one of the preceding claims, **characterized in that** the cutter(s) (4) are driven to vibrate at a frequency between 200 Hz and 500 Hz.

7. Device according to one of the preceding claims, **characterized in that** said cutter (4) comprises a single U-shaped blade of which the bottom, intended to cut the bottom of the groove (S), is arranged parallel to the plane of said profiled element (B), and of which the two lateral branches, intended to cut the flanks of the groove (S), are vertical or flared from the bottom of the U towards the top of the U.

8. Device according to one of Claims 1 to 6, **characterized in that** said cutter (4) comprises a pair of respectively right (42) and left (41) blades, each blade (41, 42) having the shape of an L of which the small branch (410, 420), intended to cut at least one part of the bottom of the groove (S), is arranged parallel to the plane of the tyre tread (B) and of which the large branch (411, 421), intended to cut one of the flanks of the groove (S), is vertical or flared outwards and upwards, the two right (42) and left (41) blades of one and the same pair being fastened behind one another on a support plate (20) of the cutting assembly (2) in the direction of travel (X-X') of said profiled element (B), in such a way that the cuts formed by their respective small branches (410, 420) in the profiled element overlap at least partially.

9. Device according to Claims 2 and 7 or according to claims 2 and 8, **characterized in that** the cutting assembly (2) comprises a support plate (20) arranged horizontally opposite the upper face of the profiled element (B), **in that** this support plate (20) comprises one or two transverse slots (203, 204) perpendicular to the direction of travel (X-X') of said profiled element, **in that** each blade of a cutter (4) is fastened to a support block (43), and **in that** each support block (43) is fastened to said support plate (20) by means of a screw (205) which passes through the slot(s) (203, 204), the screw (205) and the transverse slot(s) (203, 204) constituting said means (203, 204) for adjustment of the transverse position of said cutter(s) (4).

10. Device according to one of the preceding claims, **characterized in that** said frame (1) comprises two parallel cheeks (11) spaced apart from one another, **in that** said travel means (3) comprise a support roller (30) and two application rollers, termed "upstream" roller (31) and "downstream" roller (32), of smaller diameter than the support roller, **in that** said support roller (30) is mounted rotatably between the two cheeks (11) about an axis of rotation (Y-Y') perpendicular to the direction of travel (X-X') of said profiled element (B) and is arranged below said cutting assembly (2), and **in that** the two application rollers (31, 32) are also mounted rotatably between the two cheeks (11) about respective axes of rotation (Y1-Y'1; Y2-Y'2) parallel to the axis of rotation (Y-Y') of the support roller (30), the two upstream (31) and downstream (32) application rollers being arranged on either side of said support roller (30) in such a way as to cooperate therewith to clamp the profiled element (B) and press it against an angular portion of the outer surface of said support roller (30).

11. Device according to Claim 10, **characterized in that** said support roller (30) is driven in rotation by a motor.

12. Device according to Claim 10 or 11, **characterized in that** said support roller (30) comprises a means for laterally maintaining said profiled element (B) on its outer surface, such as a vacuum suction device arranged inside said roller.

13. Device according to one of Claims 10 to 12, **characterized in that** the support roller and/or at least one of the application rollers (31, 32) comprises a device for the thermal regulation of said profiled element (B).

14. Method for cutting the profile of a tyre tread in a profiled element (B) made of a raw rubber mixture and before cutting this profiled element into various sections intended for the fabrication of tyre treads of various tyres, **characterized in that** it comprises the steps consisting of:
- manufacturing a profiled element (B) with the aid of an extruder,
- cutting at least one longitudinal groove (S) on the outer surface of said profiled element (B) with the aid of the device according to any one of the preceding claims.
